# EUROPEAN PATENT SPECIFICATION

(11) **EP 2 813 479 B1**
(45) Date of publication and mention of the grant of the patent: **27.03.2019**
(21) Application number: 14168293.0
(22) Date of filing: 14.05.2014
(51) Int. Cl.: C04B 18/10, C04B 18/30, B09B 3/00, C04B 18/02

(54) **Method for manufacturing of pellets comprising municipal waste incinerator bottom ash**
Verfahren zur Herstellung von Pellets aus der Hausmüllbodenasche aus einer Verbrennungsanlage
Procédé de fabrication de granules comprenant des cendres de fond d'incinérateur de déchets municipaux

(30) Priority: 14.05.2013 NL 2010796
(43) Date of publication of application: 17.12.2014
(73) Proprietor: Heijmans Wegen B.V., 5248 JT Rosmalen (NL)
(72) Inventor: Bolk, Henricus Johannes Nicolaas Antonius, 5402 LS Uden (NL)
(74) Representative: Nederlandsch Octrooibureau

(56) References cited:
- EP-A1- 0 582 008
- DE-A1- 19 522 704
- WAINWRIGHT P J: "ARTIFICIAL AGGREGATE FROM DOMESTIC REFUSE", CONCRETE, THE CONCRETE SOCIETY, GB, vol. 15, no. 5, 1 May 1981 (1981-05-01), pages 25-29, XP008063372, ISSN: 0010-5317

## Description

### TECHNICAL FIELD

The present invention relates to a method for manufacturing of pellets of municipal waste incinerator bottom ash.

Presently municipal waste is burned in incinerators. The fly ash residue can be useful applied in the manufacturing of asphalt as a filler component. The coarse residue of municipal waste incinerator ash forms the municipal waste incinerator bottom ash, MIBA. The MIBA is stored for stabilizing. After stabilizing the MIBA is pre-processed, comprising removing of ferrous and non-ferrous metal particles from the MIBA and crushing the MIBA to grains with a size smaller than 40 mm.

The pre-processed MIBA can be used as a road construction material under conditioned environment, for example, in an isolated, controlled and monitored environment.

The MIBA can also be usefully applied without those measures in, for example, building materials or road constructions, wherein hazardous materials should be immobilized so that these hazardous materials cannot leach into the environment. Thereto the MIBA is divided in two fractions. A first fraction with a particle size in the range from 0 to 12 mm and a second fraction with a particle size in the range from 12 to 40 mm. The fractions can be obtained by, for example, sieving and washing. The second fraction with a particle size in the range from 12 to 40 mm can be directly applied as aggregates in concrete which provides a good immobilization of the hazardous materials in the aggregates or applied in road bases in combination with a binder.

The first fraction with a particle size from 0 to 12 mm can be further processed by, for example, an Advance Dry Recovery, ADR, Process. The ADR process further separates the ferrous and non-ferrous metal particle from the MIBA and provides a third and fourth fraction of MIBA with respectively a particle size in the range from 0 to 2 mm and in the range from 2 to 12 mm. The third fraction of the MIBA, with a particle size in the range from 0 to 2 mm, can be agglomerated in aggregates in order to immobilize the hazardous materials in the MIBA in order to meet regulations against leaching out of the hazardous materials from the aggregates. The aggregates can then be used as a replacement for stones/ aggregates in concrete or asphalt or directly in road bases.

The fourth fraction with a particle size in the range from 2 to 12 mm can be directly used as aggregates in concrete.

Document WO2008049642 discloses a method of manufacturing aggregates from fly ash and MIBA for use in construction, the method including: providing an admixture comprising: a first residue selected from pozzolane fly ashes, the first residue making up 20% to 85% by dry weight of the admixture, and a second residue selected from the MIBA, the second residue making up 10% to 80% by dry weight of the admixture and having a particle size defined by at most 50% of the second residue passing a 0.125 mm sieve; mixing the admixture; adjusting the moisture content of the admixture by adding an amount of water to form a wet mix; and processing the wet mix to form the aggregate. A disadvantage of this method is that the dwelling time to form the aggregates is relatively long.

A manufacturing method for pellets from incinerator bottom ash is also known from the document "Municipal Waste Incinerator Ash in manufactured Aggregate", edited by Derren Cresswekk, October 2007. That document discloses a method for manufacturing comprising agglomeration of MIBA on an inclined pan with a small amount of moisture, drying prior to thermal processing and firing the dried pellets at a temperature between 1100-1200 °C in a rotary kiln. The kiln are usually fired by fossil burners.

A disadvantage of this method that the firing step consumes relatively a lot of energy to heat the aggregates up to between 1000 -1200 °C.

EP0582008 discloses solid waste ash that is utilized in the manufacture of an aggregate and is processed to form a cold bonded pellet. The pellets may be surface coated with defined agents to seal the pellet or to provide properties which enhance the use of the pellet in either asphaltic or cement concrete mixes. A method of utilizing MSW ash includes the steps of collecting the bottom ash and fly ash components, processing the bottom ash component to remove unprocessible material and crushing the crushable component to a desired size, magnetically separating the magnetic material from at least the processed bottom ash component, treating at least the fly ash component of the ash with alkali silicate to fix the heavy metals, and utilizing the processed ash such as by adding cement or other binders in a mix to form pellets having an early strength sufficient to permit handling after 24 hours. Pellets may be treated with selective components and coatings to enhance the pellets' use as an aggregate in asphaltic or cement concrete mixes. DE19522704 discloses a method of processing slag and/or filter dust from waste incinerators involves subjecting the slag, after passing the firing grate, to direct separation into two fractions without previous quenching in a water bath, feeding the coarse fraction to a wet deslagger, separately treating the fine fraction, and cleaning the flue gases in a flue gas treatment plant which produces filter ash and gypsum in addition to chlorine-contingent residues. In the method the 0-2 mm size fine slag fraction is mixed with the previously dehydrated gypsum and is converted into a leach resistant product by moistening. WAINWRIGHT P J: "ARTIFICIAL AGGREGATE FROM DOMESTIC REFUSE", CONCRETE, THE CONCRETE SOCIETY, GB, part 15, nr. 5, 1 MAY 1981 (1982-05-01), Pages 25-29, XP008063372, ISSN: 0010-5317 discloses another example of a method for manufacturing of an aggregate from municipal bottom ash.

### SUMMARY OF THE INVENTION

It is an object of the invention to provide a method for manufacturing pellets from the fraction with a particle size in the range from 0 to 2 mm of the MIBA, which is more efficient.

A further object of the invention is to provide a complete solution for reuse of the MIBA, regardless of particle size, even for a fraction with a particle size in the range from 0 to 2 mm.

According to an aspect of the invention at least one of the above described objects is achieved by a method for manufacturing pellets from municipal waste incinerator bottom ash according to claim 1.

The inventors have found that in this way pellets can be obtained in which hazardous materials in the municipal waste incinerator bottom ash are immobilized in a matrix formed by the binder and that this method can be used the fraction of municipal incinerator bottom ash with a particle size in the range from 0 to 2 mm.

The amount of binder can be in the range 1 - 25 weight %, typically 10-15 weight %, of the total weight of the dry mix and this range is depending on the type of binder and a wished strength of the pellets. The binder can comprise, for example, Portland cement of blast furnace cement.

The pellets can be used as aggregate in concrete or concrete building elements. When the pellets are used in the concrete or concrete building elements this further immobilization prevents further leaching out of hazardous materials into the environment and the resulting concrete or concrete building elements can be used without further shielding and comply with legal environmental rules.

Thus, the method according to the invention provides a solution for the reuse of the fraction of the MIBA with a particle size from 0 to 6 mm.

A further advantage is that the pellets have a substantially spherical shape and when applied in concrete or concrete products improve the quality thereof.

In an embodiment the particle size in the fraction of the municipal incinerator bottom ash is in the range from 0 to 4 mm or 0 to 2 mm.

According to claim 1, the method comprises, before the mixing, adding a filler with a particle size in the same range as that of the particles or smaller than the size of the particles in the fraction of municipal incinerator bottom ash. The filler is fines from crushing processes, wash processes or sieve processing of stones, minerals or demolition materials or denaturised asbestos fiber cement. Addition of a mineral dust or mineral fines with a particle size in the same range as that of the fraction or smaller than the size of the particles in the fraction of the municipal incinerator bottom ash accelerates forming of the aggregates or pellets and reduces the manufacturing time of the aggregates or pellets.

In a further embodiment the binder comprises cement or mortar. The incinerator bottom ash forms a matrix with the cement or mortar in which hazardous materials are bound and cannot leach out of the manufactured pellets to the environment.

The invention also relates to the use of fines from crushing processes, wash processes or sieve processing of stones, minerals or demolition materials or denaturised asbestos fiber cement according to claim 6, to pellets obtainable by the method according to claim 1-5, and to a concrete product comprising pellets claimed claim 7. Such product can be curb stones or paving stones.

### DETAILED DESCRIPTION EMBODIMENTS

The above and other, more detailed aspects of the invention will be elucidated and described by way of example in the following embodiment.

A municipal waste incinerator bottom ash, MIBA, is stored for, for example, for 6 weeks to stabilize, carbonize and stabilize chemical processes and to reduce leaching properties in the municipal waste incinerator bottom ash. After pre-processing, comprising removing ferrous and nor-ferrous metal particles from the MIBA and crushing the MIBA into grains with a size smaller than 40 mm, the MIBA can be classified in different fractions, for example, a first fraction with a particle size in a range between 0 - 12 mm and a second fraction with a particle size in range between 12- 40 mm, for example, by sieving.

The first fraction can then be further separated in a third fraction with a particle size in the range between, for example 0 and 2 mm and a fourth fraction with a particle size in the range of for example 2 to 12 mm using an Advanced Dry Recovery, ADR, process A. Alternatively, the third fraction can have a particle size in the range between 0 to 4 mm or 0 to 6 mm and the fourth fraction can have a particle size in the range between 4 to 12 mm or 6 to 12 mm.

The ADR process is known from the article ADR: A new method from dry classification" by Walter de Vries et al, Proceedings of the ISWA International Conference, Lisbon, 12-15 October 2009, p. 103. This process allows classification of the material in a third fraction with a particle size from 0 - 2 mm and a fourth fraction with a particle size between 2 and 12 mm. without drying of addition of water. Ferrous and non ferrous metal particles can be separated from the third and the fourth fraction using a magnet or an eddy current process. The fourth fraction can be directly applied as aggregates in concrete or concrete products.

The third fraction with a particle size between 0 and 2 mm is mixed with a binder.

The binder is a direct binder that reacts under addition of water without other additions, for example, Portland cement or blast furnace cement, or another non-pozzolane binder.

In a further step moisture is adjusted by adding water and the mixture is provided to a pelletizing apparatus. The pelletizing apparatus can comprise an inclined rotating disk or drum. On the rotating disk the particles aggregate and form pellets. A pelletizing apparatus as is well known to the person skilled in that art and can be, for example, a disk pelletizer or deep drum pelletizer as delivered by Mars Minerals.

After sufficient hardening the pellets are released from the pelletizer. The size of the obtained pellets can be in the range between 2 and 20 mm.

The pellets have a substantially spherical shape. The agglomerates or pellets can then used as an aggregate in concrete or in concrete products such as curb stones or pave stones or road base elements.

The amount of cement in the mix can be in the range 1 - 25 weight %, typical 10 -15 weight % of the total weight of the mix. The amount of cement is depending on the type of cement and a wished strength of the pellets and can be determined by a person skilled in the art.

In order to accelerate the manufacturing of the pellets a filler, i.e. fines from crushing processes, wash processes or sieve processing of stones, minerals or demolition materials or denaturised asbestos fiber cement is added, the particle size of the particles of the mineral dust can be in the same range as that of the fraction or smaller than the size of the particles in the fraction of the MIBA.

It should be noted that the above-mentioned embodiments illustrate rather than limit the invention, and that those skilled in the art will be able to design many alternative embodiments without departing from the scope of the appended claims.

Other variations to the disclosed embodiments can be understood and effected by those skilled in the art in practicing the claimed invention, the disclosure and the appended claims, In the claims the word "comprising" does not exclude other elements or steps, and the indefinite article "a" or "an" does not exclude a plurality.

## Claims

1. Method for manufacturing pellets from municipal waste incinerator bottom ash comprising
separating a fraction with a particle size in the range from 0 to 6 mm from the municipal waste incinerator bottom ash;
mixing the fraction with a binder;
adjustment of moisture content by adding water to form a wet mix; and
pelletizing the wet mix, wherein the method further comprises, before the mixing,
adding fines from crushing processes, wash processes or sieve processing of stones, minerals or demolition materials or denaturised asbestos fiber cement with a particle size in the same range as that of the fraction or smaller than the size of the particles in the fraction of municipal incinerator bottom ash.

2. Method according to claim 1, wherein the particle size in the fraction is in the range from 0 to 4 mm.

3. Method according to claim 1, wherein the particle size in the fraction is in the range from 0 to 2 mm.

4. Method according to any of the claims 1 - 3, wherein the binder comprises a Portland cement.

5. Method according of the claims 1 - 4, wherein the method comprises removing metal particles from the municipal waste incinerator ash.

6. Use of fines from crushing processes, wash processes or sieve processing of stones, minerals or demolition materials or denaturised asbestos fiber cement in a process for manufacturing aggregates comprising
separating a fraction with a particle size in the range from 0 to 6 mm from the municipal waste incinerator bottom ash;
adding the fines;
mixing the fraction with a binder;
adjustment of moisture content by adding water to form a wet mix; and
pelletizing the wet mix, wherein the fines have a particle size in the same range as that of the fraction or smaller than the size of the particles in the fraction of municipal incinerator bottom ash

7. Pellets obtainable by the method according to claim 1-5.

8. A concrete product comprising the pellets as claimed in claim 7.

## Patentansprüche

1. Verfahren zur Herstellung von Pellets aus der Bodenasche einer kommunalen Müllverbrennungsanlage, bei dem
eine Fraktion mit einer Teilchengröße im Bereich von 0 bis 6 mm von der Bodenasche der kommunalen Müllverbrennungsanlage abgetrennt wird, die Fraktion mit Bindemittel gemischt wird,
der Feuchtigkeitsgehalt durch Zugabe von Wasser unter Bildung einer feuchten Mischung eingestellt wird und
die feuchte Mischung pelletiert wird, wobei das Verfahren ferner, vor dem Mischen, die Zugabe von Feinmaterial aus Zerkleinerungsverfahren, Waschverfahren oder Siebungsverfahren von Steinen, Mineralien oder Bauschutt oder denaturiertem Asbestfaserzement mit einer Teilchengröße im gleichen Bereich wie das der Fraktion oder kleiner als die Größe der Teilchen in der Fraktion von Bodenasche der kommunalen Verbrennungsanlage umfasst.

2. Verfahren nach Anspruch 1, bei dem die Teilchengröße in der Fraktion im Bereich von 0 bis 4 mm liegt.

3. Verfahren nach Anspruch 1, bei dem die Teilchengröße in der Fraktion im Bereich von 0 bis 2 mm liegt.

4. Verfahren nach einem der Ansprüche 1 - 3, bei dem das Bindemittel Portlandzement umfasst.

5. Verfahren nach einem der Ansprüche 1 - 4, bei dem das Verfahren die Entfernung von Metallteilchen aus der Asche der kommunalen Verbrennungsanlage umfasst.

6. Verwendung von Feinmaterial aus Zerkleinerungsverfahren, Waschverfahren oder Siebungsverfahren von Steinen, Mineralien oder Bauschutt oder denaturiertem Asbestfaserzement in einem Verfahren zur Herstellung von Aggregaten, bei der
eine Fraktion mit einer Teilchengröße im Bereich von 0 bis 6 mm von der Bodenasche der kommunalen Müllverbrennungsanlage abgetrennt wird, Feinmaterial zugesetzt wird,
die Fraktion mit Bindemittel gemischt wird,
der Feuchtigkeitsgehalt durch Zugabe von Wasser unter Bildung einer feuchten Mischung eingestellt wird und
die feuchte Mischung pelletiert wird, wobei das Feinmaterial eine Teilchengröße im gleichen Bereich aufweist wie das der Fraktion oder kleiner ist als die Größe der Teilchen in der Fraktion von Bodenasche der kommunalen Verbrennungsanlage.

7. Pellets, die durch das Verfahren gemäß den Ansprüchen 1 - 5 erhältlich sind.

8. Betonprodukt, das die Pellets gemäß Anspruch 7 umfasst.

## Revendications

1. Procédé pour fabriquer des granulés à partir de cendres de fonds d'incinérateur de déchets municipal, comprenant les étapes consistant à séparer une fraction ayant une taille de particules dans la plage de 0 à 6 mm des cendres de fond d'incinérateur de déchets municipal ;
mélanger la fraction avec un liant ;
ajuster la teneur en humidité en ajoutant de l'eau pour former un mélange humide ; et
transformer le mélange humide en granulés, dans lequel le procédé comprend en outre, avant le mélange, l'ajout de parties fines provenant de processus de broyage, de processus de lavage d'un traitement de tamisage de pierres, de minéraux ou de matériaux de démolition ou de ciment de fibre d'amiante dénaturée ayant une taille de particules dans la même plage que celle de la fraction ou inférieure à la taille des particules dans la fraction de cendres de fond d'incinérateur municipal.

2. Procédé selon la revendication 1, dans lequel la taille de particules dans la fraction est dans la plage de 0 à 4 mm.

3. Procédé selon la revendication 1, dans lequel la taille de particules dans la fraction et dans la plage de 0 à 2 mm.

4. Procédé selon l'une quelconque des revendications 1 - 3, dans lequel le liant comprend du ciment de Portland.

5. Procédé selon l'une quelconque des revendications 1 - 4, dans lequel le procédé comprend l'enlèvement de particules de métal depuis les cendres d'incinérateur de déchets municipal.

6. Utilisation de parties fines provenant de processus de broyage, de processus de lavage ou d'un traitement de tamisage de pierres, de minéraux ou de matériaux de démolition ou de ciment de fibre d'amiante dénaturée dans un processus pour fabriquer des agrégats, comprenant les étapes consistant à séparer une fraction ayant une taille de particules dans la plage de 0 à 6 mm des cendres de fond d'incinérateur de déchets municipal ;
ajouter les parties fines ;
mélanger la fraction avec un liant ;
ajuster la teneur en humidité en ajoutant de l'eau pour former un mélange humide ; et
transformer le mélange humide en granulés, dans lequel les parties fines ont une taille de particules dans la même plage que celle de la fraction ou inférieure à la taille des particules dans la fraction de cendres de fond d'incinérateur municipal.

7. Granulés pouvant être obtenus par l'intermédiaire du procédé selon l'une quelconque des revendications 1 - 5.

8. Produits de béton comprenant les granulés selon la revendication 7.
